# EUROPEAN PATENT APPLICATION

(11) **EP 4 841 767 A1**
(43) Date of publication of application: **18.11.2026**
(21) Application number: 25861722.4
(22) Date of filing: 24.03.2025
(51) Int. Cl.: H01M 50/242, H01M 50/244, B60R 19/02, H01M 50/20

(54) **BATTERY DEVICE AND ELECTRIC DEVICE**

(71) Applicant: Contemporary Amperex Technology Co., Limited, Ningde, Fujian 352100 (CN)
(72) Inventor: WEI, Jie, Ningde Fujian 352100 (CN); ZHANG, Xiao, Ningde Fujian 352100 (CN); SONG, Xiaobin, Ningde Fujian 352100 (CN); KE, Qingpeng, Ningde Fujian 352100 (CN); PAN, Xin, Ningde Fujian 352100 (CN)
(74) Representative: Gong, Jinping
(86) International application number: PCT/CN2025/084531
(87) International publication number: WO 2026/199132

(57) **Abstract**

The present application provides a battery apparatus and an electrical apparatus. The battery apparatus includes a box, a battery cell and a protective plate, the battery cell is accommodated in the box, the protective plate is connected to the box, the protective plate includes a first fiber resin layer and a reinforcement plate, the first fiber resin layer is arranged on at least one side of the reinforcement plate along the thickness direction, the elongation after fracture el of the reinforcement plate is ≥ 28%, and the strain hardening exponent N of the reinforcement plate is ≥ 0.27. With the battery apparatus provided in the present application, the risk of deformation of the protective plate can be reduced, while the risk of fracture of the protective plate can also be reduced.

## Description

### TECHNICAL FIELD

The present application relates to the technical field of batteries, and in particular, to a battery apparatus and an electrical apparatus.

### BACKGROUND

Battery apparatuses are widely used in electronic devices, such as a mobile phone, a laptop computer, a battery vehicle, an electric vehicle, an electric plane, an electric ship, an electric toy car, an electric toy ship, an electric toy plane, and an electric tool.

In the development of battery apparatus technology, not only is the use performance of a battery apparatus to be improved, but also the reliability of the battery apparatus is an issue to be considered. Therefore, it is an issue to be continuously improved in the battery apparatus technology as to how to improve the reliability of the battery apparatus.

### SUMMARY OF THE INVENTION

The present application provides a battery apparatus and an electrical apparatus to improve the reliability of the battery apparatus.

The present application is implemented by the following technical solutions.

In a first aspect, the battery apparatus provided in the present application includes a box, a battery cell and a protective plate, the battery cell is accommodated in the box, the protective plate is connected to the box, the protective plate includes a first fiber resin layer and a reinforcement plate, the first fiber resin layer is arranged on at least one side of the reinforcement plate along the thickness direction, the elongation after fracture e1 of the reinforcement plate is ≥ 28%, and the strain hardening exponent N of the reinforcement plate is ≥ 0.25.

According to the battery apparatus provided in the embodiment of the present application, by providing that the reinforcement plate has e1 ≥ 28% and N ≥ 0.25, due to the high N value, the hardness, tensile strength and yield strength of the protective plate of the battery apparatus are all improved under the action of repeated external impacts or loads. At the same time, the protective plate has good elongation after fracture and can undergo large plastic deformation under the action of external impact loads. As such, the risk of deformation of the protective plate can be reduced while the risk of fracture of the protective plate can be reduced.

According to some embodiments of the present application, the tensile strength of the reinforcement plate is σₐ, the yield strength of the reinforcement plate is σ_{b}, el ≥ 40%, N ≥ 0.27, σₐ≥ 900 MPa, and σ_{b}≥ 420 MPa.

In the above solution, by setting e1 ≥ 40%, N ≥ 0.27, σₐ≥ 900 MPa, and σ_{b}≥ 420 MPa, the ability of the protective plate to resist external impact, vibration and other loads can be further improved, and the risk of deformation or cracking of the protective plate under the action of external loads can be further reduced.

According to some embodiments of the present application, the tensile strength of the reinforcement plate is σₐ, the yield strength of the reinforcement plate is σ_{b}, σₐ≥ 1200 MPa, and σ_{b}≥ 600 MPa.

In the above solution, by setting σₐ≥ 1200 MPa, and σ_{b}≥ 600 MPa, the ability of the protective plate to withstand external impact, vibration and other loads can be further improved, and the risk of deformation or permanent failure of the protective plate when the battery apparatus is under the action of external loads can be further reduced.

According to some embodiments of the present application, the plastic strain ration R of the reinforcement plate meets the condition R ≥ 0.8.

In the above solution, by providing that the reinforcement plate has the plastic strain ratio R ≥ 0.8, the uniformity of the isotropic performance of the protective plate can be improved and the risk of breakage of the protective plate under external loads can be reduced.

According to some embodiments of the present application, the reinforcement plate is a steel plate, and the mass content of carbon in the reinforcement plate ranges from 0.07% to 0.12%.

In the above solution, by providing the reinforcement plate as a steel plate and providing that the mass content of carbon in the reinforcement plate ranges from 0.07% to 0.12%, the protective plate 20 can have the elongation after fracture e1 ≥ 28% and the strain hardening exponent N ≥ 0.25, and the tensile strength and yield strength of the protective plate 20 can be improved.

According to some embodiments of the present application, the surface roughness Ra of at least one side of the reinforcement plate facing the first fiber resin layer meets the condition 0.05 µm ≤ Ra ≤ 0.5 µm.

In the above solution, by setting 0.05 µm ≤ Ra ≤ 0.5 µm, the bonding strength between the reinforcement plate and the first fiber resin layer can be improved and the risk of falling off of the first fiber resin layer can be reduced, while the production process of the protective plate can be simplified and the structural strength and bearing capacity of the protective plate can be improved.

According to some embodiments of the present application, the thickness h1 of the reinforcement plate meets the condition 0.3 mm ≤ h1 ≤ 3 mm.

In the above solution, by setting 0.3 mm ≤ h1 ≤ 3 mm, the structural strength of the protective plate can meet relevant requirements while the energy density of the battery apparatus can be improved.

According to some embodiments of the present application, the mass content of the fibers in the first fiber resin layer is greater than or equal to 50%, and the thickness h2 of the first fiber resin layer meets the condition 0.5 mm ≤ h2 ≤ 2.5 mm.

In the above solution, by providing that the mass content of the fibers in the first fiber resin layer is greater than or equal to 50% and the thickness h2 of the first fiber resin layer meets the condition 0.5 mm ≤ h2 ≤ 2.5 mm, the structural strength of the first fiber resin layer and its protective effect on the reinforcement plate can be improved, thereby reducing the risk of corrosion of the reinforcement plate, while the energy density of the battery apparatus can be improved.

According to some embodiments of the present application, the first fiber resin layer includes at least one layer of first unidirectional fibers and at least one layer of second unidirectional fibers, the first unidirectional fibers extend along a first direction, the second unidirectional fibers extend along a second direction, the first direction is perpendicular to the second direction, and the number of layers of the second unidirectional fibers is greater than the number of layers of the first unidirectional fibers.

In the above solution, by providing that the number of layers of the second unidirectional fibers is greater than the number of layers of the first unidirectional fibers in the first fiber resin layer, the tensile strength and elastic modulus of the first fiber resin layer along the second direction can be improved, so that when the vehicle is traveling along the first direction, the first fiber resin layer can withstand a greater scratch force along the first direction, thereby reducing the risk of deformation or fracture of the protective plate due to scratches.

According to some embodiments of the present application, the tensile strength σ_{c} of the first fiber resin layer along the second direction is ≥ 300 MPa, and the elastic modulus E1 of the first fiber resin layer along the second direction is ≥15 MPa.

In the above solution, the first fiber resin layer has higher tensile strength and elastic modulus along the second direction, so that the first fiber resin layer can withstand a greater force perpendicular to the first direction. During the movement of the battery apparatus along the first direction, the risk of deformation or fracture of the first fiber resin layer due to scratches can be further reduced.

According to some embodiments of the present application, the tensile strength σ_{d} of the first fiber resin layer along the first direction is ≤ 280 MPa, and the elastic modulus E2 of the first fiber resin layer along the first direction is ≥ 10 MPa.

In the above solution, by providing that the tensile strength σ_{d} of the first fiber resin layer along the first direction is ≤ 280 MPa and the elastic modulus E2 of the first fiber resin layer along the first direction is ≥10 MPa, fewer first unidirectional fibers can be laid along the first direction in the first fiber resin layer, so that the production cost of the protective plate can be reduced while meeting the mechanical requirements of the first fiber resin layer along the first direction.

According to some embodiments of the present application, the protective plate is arranged below the box along the direction of gravity, and the first fiber resin layer is arranged at least on a side of the reinforcement plate facing away from the battery cell.

In the above solution, when the vehicle is traveling, the first fiber resin layer can withstand the scratching force from obstacles on the road surface, and the first fiber resin layer can provide good protection for the reinforcement plate, so that the risk of wear of the reinforcement plate can be reduced while the risk of corrosion of the reinforcement plate can be reduced.

According to some embodiments of the present application, both sides of the reinforcement plate along the thickness direction are provided with the first fiber resin layer.

In the above solution, both sides of the reinforcement plate along the thickness direction are covered by the first fiber resin layer, which can further reduce the risk of corrosion of the reinforcement plate caused by contact between external water, oxygen, etc. and the reinforcement plate.

According to some embodiments of the present application, the protective plate further includes a resin frame, which is arranged around the peripheral side of the reinforcement plate and is integrally formed with the first fiber resin layer.

In the above solution, the resin frame is arranged around the peripheral side of the reinforcement plate, and the first fiber resin layer is arranged on at least one side of the reinforcement plate along the thickness direction. The end surface of the peripheral side of the reinforcement plate is protected by the resin frame, and at least one side of the reinforcement plate along the thickness direction is protected by the first fiber resin layer, which can further reduce the risk of corrosion of the reinforcement plate.

According to some embodiments of the present application, both sides of the reinforcement plate and the resin frame along the thickness direction are provided with a first fiber resin layer, and the resin frame is integrally formed with the first fiber resin layers on both sides along the thickness direction.

In the above solution, the resin frame is arranged around the peripheral side of the reinforcement plate, and the first fiber resin layer is arranged on both sides of the reinforcement plate along the thickness direction. With the resin frame and the first fiber resin layer on both sides along the thickness direction coated over the surface of the reinforcement portion, the risk of contact between the reinforcement plate and external water, oxygen, etc., can be reduced, so that the risk of corrosion of the reinforcement plate can be further reduced, and the reliability of the protective plate can be improved.

In a second aspect, an electrical apparatus provided by an embodiment of the present application includes the battery apparatus provided by the above embodiment, and the battery apparatus is used for providing electric energy.

The electrical apparatus provided by the embodiment of the present application adopts the battery apparatus provided by any one of the above embodiments, so it has the same technical effect and will not be described again here.

According to some embodiments of the application, the first fiber resin layer includes at least one layer of first unidirectional fibers and at least one layer of second unidirectional fibers. The first unidirectional fibers extend along a first direction, and the second unidirectional fibers extend along a second direction, the first direction is perpendicular to the second direction, the number of layers of the second unidirectional fibers is greater than the number of layers of the first unidirectional fibers, and the electrical apparatus moves forward or backward along the first direction.

In the above solution, by providing that the number of layers of the second unidirectional fibers is greater than the number of layers of the first unidirectional fibers in the first fiber resin layer, the tensile strength and elastic modulus of the first fiber resin layer along the second direction can be increased, so that when the electrical apparatus is traveling along the first direction, the first fiber resin layer can withstand a greater scratch force along the first direction, thereby reducing the risk of deformation or fracture of the protective plate due to scratches.

The above description is only an overview of the technical solutions of the present application. In order to better understand the technical means of the present application and thus implement them according to the contents of the specification, and in order to make the aforementioned and other objectives, features and advantages of the present application more obvious and understandable, a detailed description of the present application is given hereinafter.

### BRIEF DESCRIPTION OF DRAWINGS

In order to illustrate the technical solutions of embodiments of the present application more clearly, the drawings required in the embodiments of the present application are briefly introduced below. Obviously, the drawings described below show only some embodiments of the present application. Those of ordinary skill in the art can also obtain other drawings according to the drawings without any creative effort.
FIG. 1 is a schematic structural view of a vehicle provided in an embodiment of the present application;
FIG. 2 is a schematic exploded structural view of a battery apparatus provided in an embodiment of the present application;
FIG. 3 is a schematic exploded structural view of a protective plate in a battery apparatus provided in an embodiment of the present application;
FIG. 4 is a schematic sectional structural view of a protective plate in a battery apparatus provided in an embodiment of the present application; and
FIG. 5 is a schematic structural view of the number of unidirectional fibers in a first fiber resin layer in a battery apparatus provided in an embodiment of the present application.

In the drawings, the drawings are not drawn to an actual scale.

### Description of reference numerals:

1 - vehicle;
10 - battery apparatus; 11 - box; 111 - first sub-box; 112 - second sub-box;
20 - protective plate; 21 - first fiber resin layer; 211 - first unidirectional fiber; 212 - second unidirectional fiber; 22 - reinforcement plate; 23 - resin frame;
30 - battery cell;
X - first direction; Y - second direction; Z - thickness direction.

### DETAILED DESCRIPTION

Embodiments of the present application are described in further detail below in conjunction with the drawings and embodiments. The following detailed description of the examples and the drawings are used to illustrate the principles of the present application by way of example, but should not be used to limit the scope of the present application, that is, the present application is not limited to the described examples.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated.

Reference to "an embodiment" herein means that a particular feature, structure, or characteristic described with reference to an embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "a plurality of" refers to two or more (including two). Similarly, "a plurality of groups" refers to two or more (including two) groups, and "a plurality of pieces" refers to two or more (including two) pieces, unless otherwise specifically defined.

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operated in a specific orientation, and therefore, cannot be understood as a limitation to the embodiments of the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. Those of ordinary skill in the art may understand the specific meanings of the above terms in the embodiments of the present application according to the specific situations.

In the present application, the term "a plurality of" refers to more than two (including two), similarly, "a plurality of groups" refers to two or more groups (including two groups), and "a plurality of pieces" refers to more than two pieces (including two pieces).

The battery apparatus mentioned in the embodiments of the present application refers to one or more battery cell assemblies for providing voltage and capacity. The battery cell assembly may include a plurality of battery cells which are connected in series, in parallel or in parallel-series connection through bus components.

In some embodiments, a battery cell assembly is usually formed by arranging a plurality of battery cells. As an example, the battery cell assembly may be a battery module, and the battery module is formed as a standalone module by arranging and fixing a plurality of battery cells. As an example, the battery module may be formed by bundling a plurality of battery cells by cable ties.

In some embodiments, the battery apparatus may be a battery pack. The battery pack includes a box and one or more battery cell assemblies. The battery cell assembly is accommodated in the box.

As an example, the battery cell assembly may be a battery module, and the battery cell assembly may be accommodated in the box by fixing the battery module in the box.

As an example, the battery cell assembly may also be accommodated in the box by directly fixing a plurality of battery cells in the box.

In some embodiments, the box may serve as a part of a chassis structure of a vehicle. For example, a part of the box may become at least a part of a vehicle floor, or a part of the box may become at least a part of a cross beam and a longitudinal beam of a vehicle.

In some embodiments, the battery apparatus may be an energy storage apparatus. The energy storage apparatus includes an energy storage container, an energy storage electric cabinet, etc.

A battery apparatus usually includes a box and a protective plate. The box is used to accommodate components such as battery cells and a battery management system. The protective plate is usually connected to the box to provide some protection for the box and the battery cells and related components therein, reducing the risk of large external stress, impact, vibration and other loads being transmitted to the battery cells and causing damage to the battery cells. In the related art, the protective plate is easily broken, twisted and deformed due to external loads such as scratches, impacts or vibrations, which seriously affects the reliability of the battery apparatus.

In view of this, the battery apparatus provided in the embodiments of the present application includes a box, a battery cell and a protective plate, the battery cell is accommodated in the box, the protective plate is connected to the box, the protective plate includes a first fiber resin layer and a reinforcement plate, the first fiber resin layer is arranged on at least one side of the reinforcement plate along the thickness direction, the elongation after fracture e1 of the reinforcement plate is ≥ 28%, and the strain hardening exponent N of the reinforcement plate is ≥ 0.25.

In the battery apparatus provided in the embodiments of the present application, by providing that the reinforcement plate has e1 ≥ 28% and N ≥ 0.25, due to the high N value, the hardness, tensile strength and yield strength of the protective plate of the battery apparatus are improved under repeated external impacts or loads. At the same time, the protective plate has good elongation after fracture and can undergo large plastic deformation under the action of external impact loads. As such, the risk of deformation of the protective plate can be reduced while the risk of fracture of the protective plate can be reduced.

The technical solutions described in the embodiments of the present application are applicable to a battery apparatus and an electrical apparatus using the battery apparatus.

The battery apparatus disclosed in the embodiments of the present application can be used, without limitation, in an electrical apparatus, such as a vehicle, a ship, or an aircraft. The battery apparatus disclosed in the present application may be used to form a power supply system of the electrical apparatus.

An embodiment of the present application provides an electrical apparatus using a battery apparatus as a power source. The electrical apparatus may be, but is not limited to, a mobile phone, a tablet PC, a laptop computer, an electric toy, an electric tool, an electric bicycle, an electric motorcycle, an electric vehicle, a ship, a spacecraft, or the like. The electric toy may include fixed or mobile electric toys, such as a game machine, an electric vehicle toy, an electric ship toy, and an electric airplane toy. The spacecraft may include an airplane, a rocket, a space shuttle, a spaceship, and the like.

For convenience of description, the following embodiments are illustrated by taking an example in which an electrical apparatus according to an embodiment of the present application is a vehicle.

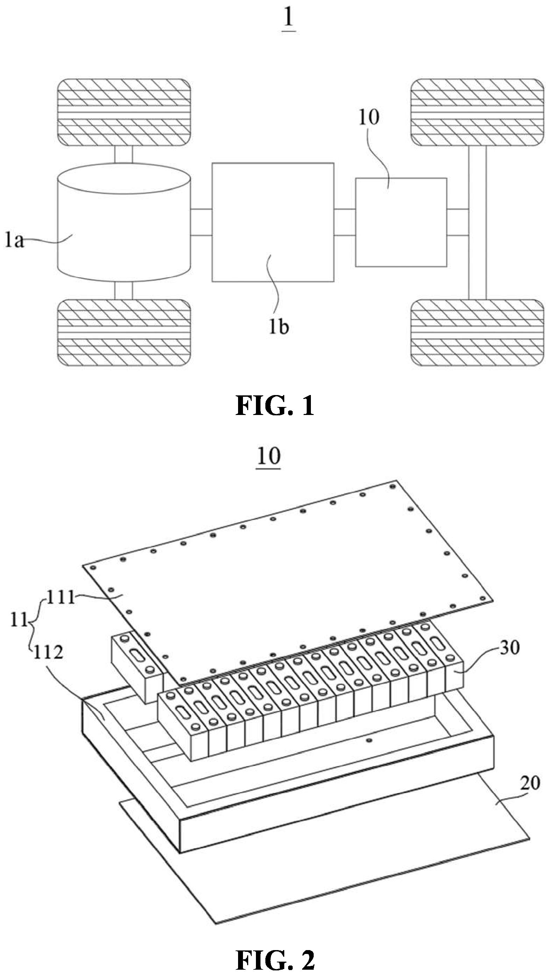

Referring to FIG. 1, FIG. 1 is a schematic structural view of a vehicle 1 provided in an embodiment of the present application. The vehicle 1 may be a fuel vehicle, a gas vehicle, or a new energy vehicle, and the new energy vehicle may be an all-electric vehicle, a hybrid electric vehicle, an extended range electric vehicle, or the like. A battery apparatus 10 is arranged inside the vehicle 1, and the battery apparatus 10 may be arranged at the bottom, the front or the rear of the vehicle 1. The battery apparatus 10 may be used for supplying power to the vehicle 1. For example, the battery apparatus 10 may be used as an operating power source of the vehicle 1, which is used for a circuit system of the vehicle 1, for example, for meeting operation power requirements of the vehicle 1 during starting, navigation and running.

The vehicle 1 may further include a controller 1b and a motor 1a. The controller 1b is used for controlling the battery apparatus 10 to power the motor 1a, for example, for meeting operating power requirements of the vehicle 1 during starting, navigation and traveling.

In some embodiments of the present application, the battery apparatus 10 not only may serve as an operating power source for the vehicle 1, but also may serve as a driving power source for the vehicle 1, thus replacing or partially replacing fuel or natural gas to provide driving power for the vehicle 1.

Referring to FIG. 2, FIG. 2 is a schematic structural view of a battery apparatus 10 provided in an embodiment of the present application. The battery apparatus 10 includes a box 11 and a battery cell 30. The battery cell 30 is accommodated in the box 11. The box 11 is used for providing an accommodating space for the battery cell 30, and the box 11 may be of a variety of structures.

In some embodiments, the box 11 may include a first sub-box 111 and a second sub-box 112. The first sub-box 111 and the second sub-box 112 are covered by each other, and the first sub-box 111 and the second sub-box 112 together define an accommodating space for accommodating the battery cell 30. The second sub-box 112 may be of a hollow structure with one end open, the first sub-box 111 may be of a plate-like structure, and the first sub-box 111 covers the opening side of the second sub-box 112, so that the first sub-box 111 and the second sub-box 112 together define the accommodating space. Alternatively, both of the first sub-box 111 and the second sub-box 112 may be of a hollow structure with one side open, and the opening side of the first sub-box 111 covers the opening side of the second sub-box 112.

In the battery apparatus 10, there may be a plurality of battery cells 30, and the plurality of battery cells 30 may be connected in series, in parallel, or in parallel-series, and the parallel-series connection means that some of the plurality of battery cells 30 are connected in series and some in parallel. The plurality of battery cells 30 may be directly connected in series, in parallel, or in parallel-series, and then the entirety formed by the plurality of battery cells 30 is accommodated in the box 11. Of course, the battery apparatus 10 may alternatively be an entirety formed by connecting the plurality of battery cells 30 in series, in parallel, or in parallel-series to form battery modules and then connecting the plurality of battery modules in series, in parallel, or in parallel-series, and is then accommodated in the box 11. The battery apparatus 10 may further include other structures. For example, the battery apparatus 10 may further include a bus component for electrically connecting the plurality of battery cells 30.

The battery cell 30 may be a secondary battery or a primary battery; and the battery cell 30 may also be a lithium-sulfur battery, a sodium-ion battery or a magnesium-ion battery, but is not limited thereto.

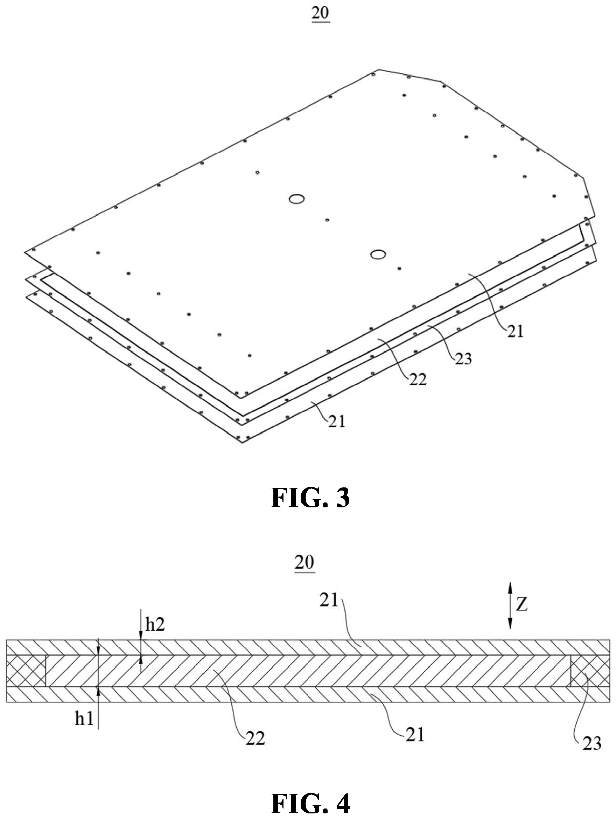

In a first aspect, as shown in FIGS. 2 and 3, the battery apparatus 10 provided in the embodiments of the present application includes a box 11, a battery cell 30 and a protective plate 20, the battery cell 30 is accommodated in the box 11, the protective plate 20 is connected to the box 11, the protective plate 20 includes a first fiber resin layer 21 and a reinforcement plate 22, the first fiber resin layer 21 is arranged on at least one side of the reinforcement plate 22 along the thickness direction Z, the elongation after fracture e1 of the reinforcement plate 22 is ≥ 28%, and the strain hardening exponent N of the reinforcement plate 22 is ≥ 0.25.

The protective plate 20 is connected to the box 11. Optionally, the protective plate 20 can be connected to the upper or lower side of the box 11 along the direction of gravity. Of course, the protective plate 20 can also be connected to both the upper and lower sides of the box 11 along the direction of gravity.

The protective plate 20 includes a first fiber resin layer 21 and a reinforcement plate 22. Optionally, the reinforcement plate 22 may be a metal plate or the like to provide good protection for the battery cell 30. The first fiber resin layer 21 may be arranged on any one side of the reinforcement plate 22 along the thickness direction Z, or the first fiber resin layer 21 may be arranged on both sides of the reinforcement plate 22 along the thickness direction Z. For example, the first fiber resin layer 21 may be arranged at least on a side of the reinforcement plate 22 facing away from the battery cell 30. The first fiber resin layer 21 can provide some protection for the reinforcement plate 22, thereby reducing the risk of corrosion of the reinforcement plate 22 due to water, oxygen, etc. in the external environment.

The elongation after fracture may be the percentage of the elongated length of the specimen after fracture of the specimen in a tensile test to its original length. It reflects the ability of a material to undergo permanent plastic deformation before fracture and is a key parameter for evaluating the ductility of the material. For the test method of elongation after fracture, please refer to GB/T 228.1-2021 "Metallic materials - Tensile testing - Part 1: Method of test at room temperature". It can be understood that the greater the value of the elongation after fracture e1 of the reinforcement plate 22 is, the better ductility the reinforcement plate 22 will exhibit under the action of external impact, vibration and other loads, and the lower the risk of fracture will be.

The strain hardening exponent N is an important parameter that describes the degree of hardening of a material during plastic deformation. It is a parameter that describes the ability of a material to have a strength gradually increased due to the obstruction of dislocation movement during plastic deformation. It reflects the ability of the material to resist continued deformation during the uniform plastic deformation stage and is a key indicator for evaluating the processing hardening characteristics of the material. It can be understood that the greater the N value is, the stronger the strain hardening ability of the material is. During plastic deformation, the strength of the material can be greatly improved, which can improve the ability of the material to plastically deform uniformly.

The reinforcement plate 22 has a high N value, so the reinforcement plate 22 can absorb energy through plastic deformation when overloaded, thereby improving the impact resistance of the protective plate 20. For the method for determining the N value of the reinforcement plate 22, please refer to GB/T 5028-2008 "Metallic materials - Sheet and strip - Determination of tensile strain hardening exponent (n value)".

Therefore, for the reinforcement plate 22, the greater the value of the elongation after fracture e1 is, the greater the plastic deformation that the protective plate 20 can undergo before fracture under the action of loads such as vibration and impact during the use of the battery apparatus 10, and the less likely it is to be fractured.

During the use of the battery apparatus 10, the protective plate 20 will inevitably be subjected to repeated scratches, impacts or vibrations and other loads. To some extent, the greater the strain hardening exponent of the reinforcement plate 22 is, the greater the level of increase in its hardness, tensile strength or yield strength under multiple external loads is, and the less likely it is to deform.

To this end, the inventors conducted a series of experiments and performed bottom ball tests on different battery apparatuses 10. During the test, only the elongation after fracture e1 and strain hardening exponent N of the reinforcement plate 22 of the different battery apparatuses 10 were changed, and other parameters remained unchanged. For the testing method, please refer to GB 38031-2020 "Electric vehicles traction battery safety requirements". The ball head is of a hemispherical shape with a diameter of 30 mm, the mass of the ball head is 10 Kg, and the material of the ball head is 45 steel. Different impact energies are provided to the reinforcement plate 22 along the thickness direction Z of the reinforcement plate 22. The test results are shown in Table 1 below.

**Table 1 Effect of the elongation after fracture e1 and strain hardening exponent N of the reinforcement plate 22 of the battery apparatus 10 on the bottom ball test**

| | Elongation after fracture e1 | Strain hardening exponent N | Bottom ball test results |
|---|---|---|---|
| Comparative example 1 | 25% | 0.2 | Impact energy upper limit of 200J |
| Comparative example 2 | 28% | 0.2 | Impact energy upper limit of 220J |
| Example 1 | 28% | 0.25 | Impact energy of 280J without fracture |
| Example 2 | 40% | 0.27 | Impact energy of 300J without fracture |
| Example 3 | 45% | 0.28 | Impact energy of 300J without fracture |
| Example 4 | 50% | 0.28 | Impact energy of 300J without fracture |
| Example 5 | 55% | 0.28 | Impact energy of 300J without fracture |

It can be seen from Table 1 above that when the elongation after fracture e1 of the reinforcement plate 22 is 28% and the strain hardening exponent N is 0.25, the protective plate 20 can withstand an impact energy of 280J without fracture in the bottom ball test. Through long-term practice, the inventors found that the protective plate 20 can withstand the impact energy of 280J, that is, withstand the impact loads under many working conditions, without deformation or cracking.

Therefore, through systematic analysis and long-term practice, the inventors found that by providing that the reinforcement plate 22 has e1 ≥ 28% and N ≥ 0.25, the impact resistance of the protective plate 20 can be improved and the risk of fracture of the protective plate 20 can be reduced.

In the battery apparatus 10 provided in the embodiments of the present application, by providing that the reinforcement plate 22 has e1 ≥ 28% and N ≥ 0.25, due to the high N value, the hardness, tensile strength and yield strength of the protective plate 20 of the battery apparatus 10 are improved under the action of repeated external impacts or loads. At the same time, the protective plate 20 has good elongation after fracture and can undergo large plastic deformation under the action of external impact loads. As such, the risk of deformation of the protective plate 20 can be reduced while the risk of fracture of the protective plate 20 can be reduced as well.

In some embodiments, the tensile strength of the reinforcement plate 22 is σₐ, the yield strength of the reinforcement plate 22 is σ_{b}, e1 ≥ 40%, N ≥ 0.27, σₐ≥ 900 MPa, and σ_{b}≥ 420 MPa.

It can be seen from Table 1 above that when e1 is 40% and *N* is 0.27, the protective plate 20 of the battery apparatus 10 can withstand at least 300J of impact energy. Therefore, when e1 ≥ 40% and N ≥ 0.27, the battery apparatus 10 can withstand higher impact, vibration and other loads.

The tensile strength reflects the maximum stress that a material can withstand before breaking, while the yield strength reflects the ability of the material to resist slight plastic deformation. By providing that the reinforcement plate 22 has σₐ≥ 900 MPa and σ_{b}≥ 420 MPa, the tensile strength of the reinforcement plate 22 and its ability to resist permanent deformation under the action of external force can be improved. Optionally, the raw material of the reinforcement plate 22 may be high-toughness steel, which has high toughness.

Therefore, through systematic analysis and long-term practice, the inventors found that by settinge1 ≥ 40%, N ≥ 0.27, σₐ≥ 900 MPa, and σ_{b}≥ 420 MPa, the ability of the protective plate 20 to resist external impact, vibration and other loads can be further improved, and the risk of deformation or cracking of the protective plate 20 under the action of external loads can be further reduced.

In some embodiments, the tensile strength of the reinforcement plate 22 is σₐ, the yield strength of the reinforcement plate 22 is σ_{b}, σₐ≥ 1200 MPa, and σ_{b}≥ 600 MPa.

Since σₐ≥ 1200 MPa and σ_{b}≥ 600 MPa, the reinforcement plate 22 can withstand greater external stress and undergo higher plastic deformation, that is, the reinforcement plate 22 can absorb higher energy under the action of external impact, vibration and other loads, and thus can withstand higher impact force. Optionally, the raw material of the reinforcement plate 22 may be high energy absorption steel or the like.

Therefore, through systematic analysis and long-term practice, the inventors found that by setting σₐ≥ 1200MPa and σ_{b}≥ 600MPa, the ability of the protective plate 20 to withstand external impact, vibration and other loads can be further improved, and the risk of deformation or permanent failure of the protective plate 20 when the battery apparatus 10 is under the action of external loads can be further reduced.

In some embodiments, the plastic strain ratio R of the reinforcement plate 22 meets the condition R ≥ 0.8.

The plastic strain ratio R reflects the difference between the deformation ability along the thickness direction Z and that along the width direction during the plastic deformation of a material, which affects the splitting resistance and forming uniformity of the material.

The plastic strain ratio R of the reinforcement plate 22 is ≥ 0.8. For example, it can be provided that R ≥ 1, so that the difference between the performance of the reinforcement plate along the thickness direction Z and that along the width direction is smaller, and the isotropic effect in the forming process is better.

For the method for determining the plastic strain ratio R of the reinforcement plate 22, please refer to GB/T 5027 "Metallic materials - Sheet and strip - Determination of plastic strain ratio(r value)".

To this end, the inventors conducted a series of tests on different battery apparatuses 10, in which only the plastic strain ratio R of the reinforcement plate 22 of different battery cells 30 was changed, and other parameters remained unchanged. The test results are shown in Table 2.

**Table 2 Effect of different plastic strain ratios R of the reinforcement plate 22 of the battery apparatus 10 on the bottom ball test**

| | Plastic strain ratio R | Bottom ball test results |
|---|---|---|
| Comparative example 1 | 0.6 | Fracture at impact energy of 270J |
| Comparative example 2 | 0.7 | Fracture at impact energy of 280J |
| Example 1 | 0.8 | Impact energy of 300J without fracture |
| Example 2 | 0.9 | Impact energy of 300J without fracture |
| Example 3 | 1 | Impact energy of 300J without fracture |
| Example 4 | 1.2 | Impact energy of 300J without fracture |

It can be seen from Table 2 above that when the plastic strain ratio R of the reinforcement plate 22 is 0.8, the reinforcement plate 22 can withstand an impact energy of 300J, meeting the requirements of the bottom ball test of the protective plate 20 in the relevant standards.

Through systematic analysis and long-term practice, the inventors have found that by setting the plastic strain ratio R of the reinforcement plate 22 ≥ 0.8, the uniformity of the isotropic performance of the protective plate 20 can be improved and the risk of fracture of the protective plate 20 under external loads can be reduced.

The reinforcement plate 22 and the first fiber resin layer 21 may be formed by hot pressing. Specifically, the resin material in the first fiber resin layer 21 may be melted under high temperature and fused together with the reinforcement plate 22 during the curing. In the hot pressing process, it can be provided that the first fiber resin layer 21 can be directly compounded with the reinforcement plate 22, or an adhesive film layer can be provided between the reinforcement plate 22 and the first fiber resin layer 21 to achieve compound connection between the reinforcement plate 22 and the first fiber resin layer 21 through the adhesive film layer.

In some embodiments, the reinforcement plate 22 is a steel plate, and the mass content of carbon in the reinforcement plate 22 ranges from0.07% to 0.12%.

Specifically, a billet of nickel-saving austenite stainless steel material can be used as the raw material, and the mass content of carbon in the billet may range from 0.07% to 0.12%. The billet is subjected to a series of processes such as hot rolling, cold rolling and stamping in sequence, and finally the reinforcement plate 22 in the protective plate 20 is formed with a mass content of carbon ranging from0.07% to 0.12%. After the reinforcement plate 22 is compounded with the first fiber resin layer 21, the formed protective plate 20 can meet the following requirements: elongation after fracture e1≥ 28%and strain hardening exponent N≥ 0.25. Furthermore, by setting the mass content of carbon in the protective plate 20 in a range from0.07% to 0.12%, the tensile strength and yield strength of the reinforcement plate 22 can be improved.

Therefore, by providing the reinforcement plate 22 as a steel plate and setting the mass content of carbon in the reinforcement plate 22 in a range from0.07% to 0.12%, the protective plate 20 can have the elongation after fracturee1≥28%and the strain hardening exponent N≥ 0.25, and the tensile strength and yield strength of the protective plate 20 can be improved.

In some embodiments, the surface roughness Ra of at least one side of the reinforcement plate 22 facing the first fiber resin layer 21 meets the condition 0.05 µm ≤ Ra ≤ 0.5 µm.

Optionally, Ra may be 0.05 µm, 0.1 µm, 0.15 µm, 0.2 µm, 0.25 µm, 0.3 µm, 0.35 µm, 0.4 µm, 0.45 µm or 0.5 µm, etc.

It can be understood that, to some extent, the greater the surface roughness Ra of the side of the reinforcement plate 22 facing the first fiber resin layer 21, the more the bonding strength of the reinforcement plate 22 and the first fiber resin layer 21 in hot pressing compounding can be improved, and the more the risk of cracking of the first fiber resin layer 21 and the reinforcement plate 22 can be reduced. When the bonding strength between the first fiber resin layer 21 and the reinforcement plate 22 is great enough, the adhesive film layer between the reinforcement plate 22 and the first fiber resin layer 21 can be omitted during the hot pressing process of the reinforcement plate 22 and the first fiber resin layer 21. This helps to simplify the production process of the protective plate 20. To some extent, the smaller Ra is, the more the effective thickness of the reinforcement plate 22 can be increased, so as to improve the structural strength and bearing capacity of the reinforcement portion.

To this end, the inventors conducted a series of tests on different protective plates 20. In the tests, only the surface roughness of the reinforcement plate 22 in the different protective plates 20 was changed, and the parameters of the first fiber resin layer 21 remained the same. The measured bonding strength between the reinforcement plate 22 and the first fiber resin layer 21 is shown in Table 2 below.

**Table 3 Effect of the surface roughness of the reinforcement plate 22 on the bonding strength between the reinforcement plate 22 and the first fiber resin layer 21**

| | Surface roughness Ra of the reinforcement plate 22 (µm) | The bonding strength between the reinforcement plate 22 and the first fiber resin layer 21 |
|---|---|---|
| Comparative example 1 | 0.03 | 120 MPa to 130 MPa |
| Comparative example 2 | 0.04 | 130 MPa to 140 MPa |
| Example 1 | 0.05 | 150 MPa to 160 MPa |
| Example 2 | 0.3 | 160 MPa to 180 MPa |
| Example 3 | 0.5 | 150 MPa to 160 MPa |
| Comparative example 3 | 0.6 | 130 MPa to 150 MPa |

It can be seen from Table 3 above that in the comparative example where the surface roughness Ra of the reinforcement plate is less than 0.05 µm, the maximum bonding strength between the reinforcement plate 22 and the first fiber resin layer 21 is 140 MPa, which is relatively low. In the embodiment where the surface roughness Ra of the reinforcement plate reaches 0.05 µm, the minimum bonding strength between the reinforcement plate 22 and the first fiber resin layer 21 is 150 MPa, which just meets the requirement of the protective plate 20 for the bonding strength between the reinforcement plate 22 and the first fiber resin layer 21.

As the surface roughness Ra of the reinforcement plate further increases, when Ra reaches above 0.5 µm, the bonding strength between the reinforcement plate 22 and the first fiber resin layer 21 is further reduced, only 150 MPa at the maximum, which cannot meet the relevant requirements.

Therefore, through systematic analysis and long-term practice, the inventors found that by setting 0.05 µm ≤ Ra ≤ 0.5 µm, the bonding strength between the reinforcement plate 22 and the first fiber resin layer 21 can be improved and the risk of falling off of the first fiber resin layer 21 can be reduced, while the production process of the protective plate 20 can be simplified and the structural strength and bearing capacity of the protective plate 20 can be improved.

In some embodiments, as shown in FIG. 4, the thickness h1 of the reinforcement plate 22 meets the condition 0.3 mm ≤ h1 ≤ 3 mm.

Optionally, h1 may be 0.3 mm, 0.5 mm, 1 mm, 1.5 mm, 2 mm, 2.5 mm or 3 mm etc.

It can be understood that, to some extent, the greater the thickness h1 of the reinforcement plate 22 is, the more the structural strength and bearing capacity of the reinforcement plate 22 can be improved, whereas to some extent, the smaller the thickness of the reinforcement plate 22 is, the more the weight of the protective plate 20 can be reduced and the energy density of the battery apparatus 10 can be improved.

Therefore, through systematic analysis and long-term practice, the inventors found that by setting 0.3 mm ≤ h1 ≤ 3 mm, the structural strength of the protective plate 20 can meet relevant requirements while the energy density of the battery apparatus 10 can be improved.

In some embodiments, as shown in FIG. 4, the mass content of the fibers in the first fiber resin layer 21 is greater than or equal to 50%, and the thickness h2 of the first fiber resin layer 21 meets the condition 0.5 mm ≤ h2 ≤ 2.5 mm.

It can be understood that the higher the content of the fibers in the first fiber resin layer 21 is, the more the structural strength of the first fiber resin layer 21 can be improved. To some extent, the greater the thickness h2 of the first fiber resin layer 21 is, the more the structural strength of the first fiber resin layer 21 and its ability of protection for the reinforcement plate 22 can be improved. To some extent, the smaller h2 is, the more the weight of the protective plate 20 can be reduced, and the more the energy density of the battery apparatus 10 can be further improved.

Therefore, through systematic analysis and long-term practice, the inventors found that by providing that the mass content of the fibers in the first fiber resin layer 21 is greater than or equal to 50% and the thickness h2 of the first fiber resin layer 21 meets the condition 0.5 mm ≤ h2 ≤ 2.5 mm, the structural strength of the first fiber resin layer 21 and its protective effect on the reinforcement plate 22 can be improved, thereby reducing the risk of corrosion of the reinforcement plate 22, while the energy density of the battery apparatus 10 can be improved.

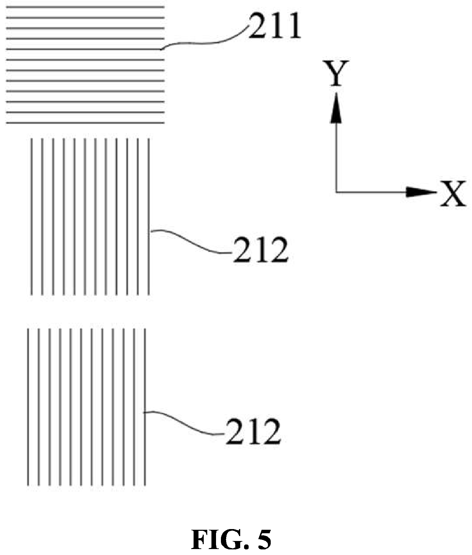

In some embodiments, as shown in FIGS. 4 and 5, the first fiber resin layer 21 includes at least one layer of first unidirectional fibers 211 and at least one layer of second unidirectional fibers 212. The first unidirectional fibers 211 extend along a first direction X, and the second unidirectional fibers 212 extend along a second direction Y, the first direction X is perpendicular to the second direction Y, and the number of layers of the second unidirectional fibers 212 is greater than the number of layers of the first unidirectional fibers 211.

After the battery apparatus 10 is loaded on the vehicle 1, it usually moves forward or backward along one direction. Therefore, the protective plate 20 will be subjected to a greater extent to the scratching force along the forward or backward direction of the vehicle 1.

By providing that the first fiber resin layer 21 includes at least one layer of first unidirectional fibers 211 and at least one layer of second unidirectional fibers 212, and the number of layers of the second unidirectional fibers 212 is greater than the number of layers of the first unidirectional fibers 211, the second unidirectional fibers 212 have a reinforcing effect on the tensile strength and yield strength of the first fiber resin layer 21 along the second direction Y, so that the first fiber resin layer 21 has higher tensile strength and elastic modulus along the second direction Y, thereby enabling the protective plate 20 to withstand greater scratch forces perpendicular to the second direction Y, etc.

Therefore, by providing that the number of layers of the second unidirectional fibers 212 is greater than the number of layers of the first unidirectional fibers 211 in the first fiber resin layer 21, the tensile strength and elastic modulus of the first fiber resin layer 21 along the second direction Y can be improved, so that when the vehicle 1 is traveling along the first direction X, the first fiber resin layer 21 can withstand a greater scratch force along the first direction X, thereby reducing the risk of deformation or fracture of the protective plate 20 due to scratches.

In some embodiments, the tensile strength σ_{c} of the first fiber resin layer 21 along the second direction Y is ≥ 300 MPa, and the elastic modulus E1 of the first fiber resin layer 21 along the second direction Y is ≥15 MPa.

As such, the first fiber resin layer 21 has higher tensile strength and elastic modulus along the second direction Y, so that the first fiber resin layer 21 can withstand a greater force perpendicular to the first direction X. During the movement of the battery apparatus 10 along the first direction X, the risk of deformation or fracture of the first fiber resin layer 21 due to scratches can be further reduced.

In some embodiments, the tensile strength σ_{d} of the first fiber resin layer 21 along the first direction X is ≤ 280 MPa, and the elastic modulus E2 of the first fiber resin layer 21 along the first direction X is ≥ 10 MPa.

When the battery apparatus 10 moves along the first direction X, it is mainly subjected to the scratching force along the first direction X. Therefore, stricter requirements are placed on the tensile strength and elastic modulus of the first fiber resin layer 21 perpendicular to the first direction X, and less strict requirements are placed on the tensile strength and elastic modulus of the first fiber resin layer 21 along the first direction X.

By providing that the tensile strength σ_{d} of the first fiber resin layer 21 along the first direction X is ≤ 280 MPa and the elastic modulus E2 of the first fiber resin layer 21 along the first direction X is ≥10 MPa, fewer first unidirectional fibers 211 can be laid along the first direction X in the first fiber resin layer 21, so that the production cost of the protective plate 20 can be reduced while meeting the mechanical requirements of the first fiber resin layer 21 along the first direction X.

In some embodiments, the protective plate 20 is arranged on the lower side of the box 11 along the direction of gravity, and the first fiber resin layer 21 is arranged at least on a side of the reinforcement plate 22 facing away from the battery cell 30.

The protective plate 20 is arranged on the lower side of the box 11 along the direction of gravity, so that the protective plate 20 protects the box 11 from below along the direction of gravity.

Optionally, the first fiber resin layer 21 may be arranged only on a side of the reinforcement plate 22 facing away from the battery cell 30, or may be arranged on both a side of the reinforcement plate 22 facing away from the battery cell 30 and a side thereof facing the battery cell 30.

If the first fiber resin layer 21 is arranged on a side of the reinforcement plate 22 facing away from the battery cell 30, then the first fiber resin layer 21 is arranged on a side of the reinforcement plate 22 facing the ground. In this way, when the vehicle 1 is traveling, the first fiber resin layer 21 can withstand the scratching force from obstacles on the road surface, and the first fiber resin layer 21 can provide good protection for the reinforcement plate 22, so that the risk of wear of the reinforcement plate 22 can be reduced while the risk of corrosion of the reinforcement plate 22 can be reduced.

In some embodiments, as shown in FIG. 4, both sides of the reinforcement plate 22 along the thickness direction Z are provided with the first fiber resin layer 21.

As such, both sides of the reinforcement plate 22 along the thickness direction Z are covered by the first fiber resin layer 21, which can further reduce the risk of corrosion of the reinforcement plate 22 caused by contact between external water, oxygen, etc. and the reinforcement plate 22.

In some embodiments, as shown in FIG. 4, the protective plate 20 further includes a resin frame 23, which is arranged around the peripheral side of the reinforcement plate 22 and is integrally formed with the first fiber resin layer 21.

The resin frame 23 is integrally formed with the first fiber resin layer 21. Optionally, the resin frame can be fused to the first fiber resin layer 21 by a hot pressing process. Specifically, the billet of the resin frame 23 is arranged around the peripheral side of the reinforcement plate 22, and the thickness of the resin frame 23 may be equal to the thickness of the reinforcement plate 22. The material of the first fiber resin layer 21 is laid on at least one side of the reinforcement portion and the resin frame 23 along the thickness direction Z. Then, in a hot pressing process, the resin frame 23 is fused to the peripheral side of the reinforcement plate 22, and the first fiber resin layer 21 is fused to at least one side of the reinforcement portion and the resin frame 23 along the thickness direction Z.

As such, the resin frame 23 is arranged around the peripheral side of the reinforcement plate 22, and the first fiber resin layer 21 is arranged on at least one side of the reinforcement plate 22 along the thickness direction Z. The end surface of the peripheral side of the reinforcement plate 22 is protected by the resin frame 23, and at least one side of the reinforcement plate 22 along the thickness direction Z is protected by the first fiber resin layer 21, which can further reduce the risk of corrosion of the reinforcement plate 22.

In some embodiments, as shown in FIG. 4, both sides of the reinforcement plate 22 and the resin frame 23 along the thickness direction Z are provided with the first fiber resin layer 21, and the resin frame 23 is integrally formed with the first fiber resin layers 21 on both sides along the thickness direction Z.

The resin frame 23 can be arranged around the peripheral side of the reinforcement plate 22, and the resin frame 23 can be arranged with the same thickness as the reinforcement portion, and the first fiber resin layer 21 is arranged on both sides of the reinforcement plate 22 and the resin frame 23 along the thickness direction Z. The resin frame 23 is welded to the first fiber resin layers 21 on both sides respectively, and is also welded and connected to the end surface of the peripheral side of the reinforcement plate 22.

As such, the resin frame 23 is arranged around the peripheral side of the reinforcement plate 22, and the first fiber resin layer 21 is arranged on both sides of the reinforcement plate 22 along the thickness direction Z. With the resin frame 23 and the first fiber resin layers 21 on both sides along the thickness direction Z coated over the surfaces of the reinforcement portion, the risk of contact between the reinforcement plate 22 and external water, oxygen, etc., can be reduced, so that the risk of corrosion of the reinforcement plate 22 can be further reduced, and the reliability of the protective plate 20 can be improved.

In a second aspect, an electrical apparatus provided by an embodiment of the present application includes the battery apparatus 10 provided by the above embodiment, and the battery apparatus 10 is used for providing electric energy.

The electrical apparatus provided by the embodiment of the present application adopts the battery apparatus 10 provided by any one of the above embodiments, so it has the same technical effect and will not be described again here.

In some embodiments, as shown in FIGS. 4 and 5, the first fiber resin layer 21 includes at least one layer of first unidirectional fibers 211 and at least one layer of second unidirectional fibers 212. The first unidirectional fibers 211 extend along a first direction X, and the second unidirectional fibers 212 extend along a second direction Y, the first direction X is perpendicular to the second direction Y, the number of layers of the second unidirectional fibers 212 is greater than the number of layers of the first unidirectional fibers 211, and the electrical apparatus moves forward or backward along the first direction X.

The number of layers of the second unidirectional fibers 212 is greater than the number of layers of the first unidirectional fibers 211, so the second unidirectional fibers 212 have a reinforcing effect on the tensile strength and yield strength of the first fiber resin layer 21 along the second direction Y, so that the first fiber resin layer 21 has higher tensile strength and elastic modulus along the second direction Y, thereby enabling the protective plate 20 to withstand greater scratch forces perpendicular to the second direction Y, etc.

Therefore, by providing that the number of layers of the second unidirectional fibers 212 is greater than the number of layers of the first unidirectional fibers 211 in the first fiber resin layer 21, the tensile strength and elastic modulus of the first fiber resin layer 21 along the second direction Y can be improved, so that when the electrical apparatus is traveling along the first direction X, the first fiber resin layer 21 can withstand a greater scratch force along the first direction X, thereby reducing the risk of deformation or fracture of the protective plate 20 due to scratches.

In some embodiments, as shown in FIGS. 2 to 5, the battery apparatus 10 provided in the embodiments of the present application includes a box 11, a battery cell 30 and a protective plate 20, the battery cell 30 is accommodated in the box 11, the protective plate 20 is connected to the box 11, the protective plate 20 includes a first fiber resin layer 21 and a reinforcement plate 22, and the first fiber resin layer 21 is arranged on both sides of the reinforcement plate 22 along the thickness direction Z. The elongation after fracture e1 of the reinforcement plate 22 is ≥ 28%, and the strain hardening exponent N of the reinforcement plate 22 is ≥ 0.25. The tensile strength of the reinforcement plate 22 is σₐ, the yield strength of the reinforcement plate 22 is σ_{b}, σₐ≥ 900 MPa, σ_{b}≥ 420 MPa, and the plastic strain ratio R of the reinforcement plate 22 meets the condition R ≥ 0.8. The surface roughness Ra of at least one side of the reinforcement plate 22 facing the first fiber resin layer 21 meets the condition 0.05 µm ≤ Ra ≤ 0.5 µm. The thickness h1 of the reinforcement plate 22 meets the condition 0.3 mm ≤ h1 ≤ 3 mm. The mass content of the fibers in the first fiber resin layer 21 is greater than or equal to 50%, and the thickness h2 of the first fiber resin layer 21 meets the condition 0.5 mm ≤ h2 ≤ 2.5 mm. The first fiber resin layer 21 includes at least one layer of first unidirectional fibers 211 and at least one layer of second unidirectional fibers 212. The first unidirectional fibers 211 extend along a first direction X, and the second unidirectional fibers 212 extend along a second direction Y, the first direction X is perpendicular to the second direction Y, and the number of layers of the second unidirectional fibers 212 is greater than the number of layers of the first unidirectional fibers 211. The tensile strength σ_{c} of the first fiber resin layer 21 along the second direction Y is ≥ 300 MPa, and the elastic modulus E1 of the first fiber resin layer 21 along the second direction Y is ≥15 MPa. The tensile strength σ_{d} of the first fiber resin layer 21 along the first direction X is ≤ 280 MPa, and the elastic modulus E2 of the first fiber resin layer 21 along the first direction X is ≥ 10 MPa. The protective plate 20 is arranged on the lower side of the box 11 along the direction of gravity, and the first fiber resin layer 21 is arranged at least on a side of the reinforcement plate 22 facing away from the battery cell 30. The protective plate 20 further includes a resin frame 23, which is arranged around the peripheral side of the reinforcement plate 22 and is integrally formed with the first fiber resin layer 21 on both sides along the thickness direction Z.

In the battery apparatus 10 provided in the embodiment of the present application, by providing that the reinforcement plate 22 has e1 ≥ 28% and N ≥ 0.25, due to the high N value, the hardness, tensile strength and yield strength of the protective plate 20 of the battery apparatus 10 are improved under the action of repeated external impacts or loads. At the same time, the protective plate 20 has good elongation after fracture and can undergo large plastic deformation under the action of external impact loads. As such, the risk of deformation of the protective plate 20 can be reduced while the risk of fracture of the protective plate 20 can be reduced as well.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A battery apparatus, comprising:
a box;
battery cells accommodated in the box; and
a protective plate connected to the box, the protective plate comprising a first fiber resin layer and a reinforcement plate, the first fiber resin layer being arranged on at least one side of the reinforcement plate along a thickness direction;
the elongation after fracture e1 of the reinforcement plate being ≥ 28%, and the strain hardening exponent N of the reinforcement plate being ≥ 0.25.

2. The battery apparatus according to claim 1, wherein the tensile strength of the reinforcement plate is σₐ, the yield strength of the reinforcement plate is σ_{b}, e1 ≥ 40%,*N*≥ 0.27, σₐ≥ 900 MPa, and σ_{b}≥ 420 MPa.

3. The battery apparatus according to claim 1, wherein the tensile strength of the reinforcement plate is σₐ, the yield strength of the reinforcement plate is σ_{b}, σₐ≥ 1200 MPa, and σ_{b}≥ 600 MPa.

4. The battery apparatus according to any one of claims 1 to 3, wherein the plastic strain ratio R of the reinforcement plate meets the condition R ≥ 0.8.

5. The battery apparatus according to any one of claims 1 to 4, wherein the reinforcement plate is a steel plate, and the mass content of carbon in the reinforcement plate ranges from 0.07% to 0.12%.

6. The battery apparatus according to any one of claims 1 to 5, wherein the surface roughness Ra of at least a side of the reinforcement plate facing the first fiber resin layer meets the condition 0.05 µm ≤ Ra ≤ 0.5 µm.

7. The battery apparatus according to any one of claims 1 to 6, wherein the thickness h1 of the reinforcement plate meets the condition 0.3 mm ≤ h1 ≤ 3 mm.

8. The battery apparatus according to any one of claims 1 to 7, wherein the mass content of fibers in the first fiber resin layer is greater than or equal to 50%, and the thickness h2 of the first fiber resin layer meets the condition 0.5 mm ≤ h2 ≤ 2.5 mm.

9. The battery apparatus according to any one of claims 1 to 8, wherein the first fiber resin layer comprises at least one layer of first unidirectional fibers and at least one layer of second unidirectional fibers, the first unidirectional fibers extend along a first direction, and the second unidirectional fibers extend along a second direction, the first direction is perpendicular to the second direction, and the number of layers of the second unidirectional fibers is greater than the number of layers of the first unidirectional fibers.

10. The battery apparatus according to claim 9, wherein the tensile strength σ_{c} of the first fiber resin layer along the second direction is ≥ 300 MPa, and the elastic modulus E1 of the first fiber resin layer along the second direction is ≥15 MPa.

11. The battery apparatus according to claim 9 or 10, wherein the tensile strength σ_{d} of the first fiber resin layer along the first direction is ≤ 280 MPa, and the elastic modulus E2 of the first fiber resin layer along the first direction is ≥ 10 MPa.

12. The battery apparatus according to any one of claims 1 to 11, wherein the protective plate is arranged on a lower side of the box along the direction of gravity, and the first fiber resin layer is arranged at least on a side of the reinforcement plate facing away from the battery cell.

13. The battery apparatus according to any one of claims 1 to 11, wherein both sides of the reinforcement plate along the thickness direction are provided with the first fiber resin layer.

14. The battery apparatus according to any one of claims 1 to 13, wherein the protective plate further comprises a resin frame, which is arranged around a peripheral side of the reinforcement plate and is integrally formed with the first fiber resin layer.

15. The battery apparatus according to claim 14, wherein both sides of the reinforcement plate and the resin frame along the thickness direction are provided with the first fiber resin layer, and the resin frame is integrally formed with the first fiber resin layers on both sides along the thickness direction.

16. An electrical apparatus, comprising the battery apparatus according to any one of claims 1 to 15, the battery apparatus being used for providing electric energy.

17. The electrical apparatus according to claim 16, wherein the first fiber resin layer comprises at least one layer of first unidirectional fibers and at least one layer of second unidirectional fibers, the first unidirectional fibers extend along a first direction, the second unidirectional fibers extend along a second direction, the first direction is perpendicular to the second direction, and the number of layers of the second unidirectional fibers is greater than the number of layers of the first unidirectional fibers; and
the electrical apparatus moves forward or backward along the first direction.
